# EUROPEAN PATENT SPECIFICATION

(11) **EP 1 602 018 B1**
(45) Date of publication and mention of the grant of the patent: **18.11.2015**
(21) Application number: 04710004.5
(22) Date of filing: 11.02.2004
(51) Int. Cl.: G06F 17/30

(54) **MESSAGE TRANSLATION USING ADAPTIVE AGENTS**
NACHRICHTENÜBERSETZUNG UNTER VERWENDUNG VON ADAPTIVEN AGENTEN
TRADUCTION DE MESSAGES AU MOYEN D'AGENTS ADAPTATIFS

(30) Priority: 13.02.2003 US 366180
(43) Date of publication of application: 07.12.2005
(73) Proprietor: SAP SE, 69190 Walldorf (DE)
(72) Inventor: VAN DE LOO, Kaj, San Francisco, CA 94117 (US); CHEN, Shuyuan, Palo Alto, CA 94306 (US)
(74) Representative: Müller-Boré & Partner Patentanwälte PartG mbB
(86) International application number: PCT/EP2004/001281
(87) International publication number: WO 2004/072755

(56) References cited:
- EP-A- 1 271 360
- WO-A-02/091240
- US-A- 5 710 917
- US-A1- 2001 014 890
- US-A1- 2002 184 213

## Description

### FIELD OF THE INVENTION

This invention relates to a system and process for translating messages between two or more different formats. The present invention is particularly useful in translating messages between multiple business applications that have been integrated.

### BACKGROUND OF THE INVENTION

Document EP 1 271 360 A2 discloses a universal mapping system, including apparatuses and methods, which is configurable through use of selectable configuration files to perform the bi-directional mapping and conversion of data between different data structures and formats. Each configuration file uniquely corresponds to a particular type of device which stores mappable data in a structure and/or format different than those of other types of devices. The universal mapping system is operable to perform mappings of data according to priority rules which are definable in the configuration files and which govern the order in which the mappings of data elements are performed. The universal mapping system is also adapted to maintain associations between data elements resulting from prior mappings. Additionally, the universal mapping system is operable to persist unmappable data from a source during a mapping in one direction and to return the unmappable data to that source during a subsequent mapping in the opposite direction.

Document US 2002/0184213 A1 discloses a data instance transformation tool for transforming a source instance to a target instance. Embodiments thereof provide a graphical rendering of source and target data instances enabling a user to select mappings between elements in the source data instance and elements in the target data instance. The data instances are typically input to embodiments as text files (e.g., DTD, XML, XML Schema Definition ("XSD") files, HTML files or the like). Additionally, in some embodiments additional characteristics or functions operating on data populating the mapped structures can be provided. Upon receipt of the mapping data (and, optionally, additional characteristic or function operations) embodiments generate a list of elements mapped from the target data instance. From this list, templates or code blocks are generated by embodiments which enable a script or source code file to be generated. The generated script or source code file, when processed on data streams of input data conforming to the original source data definition, will output a data stream which conforms to the original target data definition. The output data stream may be, for example, be formatted as an XML output file.

Document US 2001/0014890 A1 discloses a rule-based methodology which supports automatic mapping of data fields between different data sets in a data processing environment. If a field cannot be mapped or matched based on name alone (e.g., an identical match), the methodology employs rules to determine a type for the field, based on the field's name. The determined type of the field is then used for matching. The methodology can be employed to match fields which appear dissimilar phonetically but are otherwise appropriate for matching. In one embodiment, rules are stated in form of: regular expressions type. Here, the regular expression member lists the text strings or substring(s) for the field. The rules are ordered in descending preference according to the likelihood that a given rule will correctly identify a field. In this manner, the methodology allows the task of mapping fields from one data set to another to be entirely automated.

Many businesses desire to use integrated software applications. However, different independently developed business applications usually use different formats to handle and store data. When integrating such.applications, one must take care to ensure that this data can be reliably transferred between applications. As the number of applications and integration points grows, this task gets more complicated. If data is to be exchanged among business partners over the Internet, for example, the task can be further complicated.

Integrating two or more software applications usually requires a semantic mapping. A semantic mapping is the translation of a message from the syntax and data format of one application to the syntax and data format of another application. Unfortunately, developing such mappings can be costly. Additionally, once a static mapping is in place, it potentially reduces flexibility and becomes an inhibitor to change. Static mappings are also susceptible to having errors that are difficult to detect. If such errors are present, they could cause the propagation of corrupted data throughout the integrated applications.

When a new application with a new format is introduced, several new individual mappings may need to be performed to facilitate translation to and from the new format. Of course, with the larger number of mappings required when integrating a larger number of applications, the higher the cost and risk of corrupting data. Additionally, with the integration of applications of which the integrator has little knowledge, this risk increases.

When integrating such applications, one must take care to ensure that information is properly translated. Syntax translation may be necessary. Syntax translation is the mapping between the fields of one document format to the fields of another document format. Field names, number of fields, complex data types, missing fields, and field format all can cause problems in syntax translation. Thus, they all should be addressed in a message translation solution.

Data translation is usually needed because the different applications usually have differing ways of representing the same data. Some cases of the need for data translation are use of internal IDs, misspelling or different spellings (for example, American and British spellings of certain words differ), different levels of granularity, the used of abbreviations and different representations of the same information.

The prior art focused on low-level data representation in terms of schemas. In some solutions, weight is assigned to the elements or structures of the schema. Rules are formulated to compute the mapping from one schema to another.

In an article entitled "General Schema Matching with Cupid", an algorithm called Cupid is described that discovers mappings between schema elements. It does this through the use of the elements' names, data types, constraints and schema structure. It attempts to match elements through linguistic matching .and structural matching. In its linguistic matching, simple token manipulation is tolerant of variations of element names. The inventors recommend a thesaurus that incrementally learns synonyms and abbreviations from mappings performed over time.

The present invention is a higher-level architecture and process than the prior art without its drawbacks.

### SUMMARY OF THE INVENTION

The present invention consists of using software agents capable of learning to address the problem of message translation. Existing translations, external translation services and a mapping knowledge base that is continuously enhanced by the agents are employed. The present invention is thus capable of handing the translation problems without the drawbacks of traditional static mappings and other prior art solutions. This invention has many advantages over the prior art. It provides translation with reduced cost, greater flexibility and greater reliability. Another advantage is that when adding a new version of an existing application this agent of the present invention has the required intelligence and knowledge to perform the initial partial mapping and present it to a user for completion and approval.

An embodiment of the present invention provides a. system for translating messages between two or more applications.

Another embodiment of the present invention provides a process for translating messages between two or more applications.

As such, it is an object of the present invention to provide for the translation of messages between two or more applications at a reduced cost and with higher flexibility and reliability than traditional translation methods.

### BRIEF DESCRIPTION OF THE DRAWINGS

Figure 1 is a block diagram depicting examples of potential syntax translation problems between two different message formats according to an embodiment of the present invention.
Figure 2 is a block diagram depicting examples of potential data translation problems between two different message formats according to an embodiment of the present invention.
Figure 3 is a block diagram of a system for message translation according to an embodiment of the present invention.
Figure 4 is a block diagram of a process of message translation according to an embodiment of the present invention.

### DESCRIPTION OF THE PREFERRED EMBODIMENTS

The present invention will be better understood by reference to the accompanying drawings.

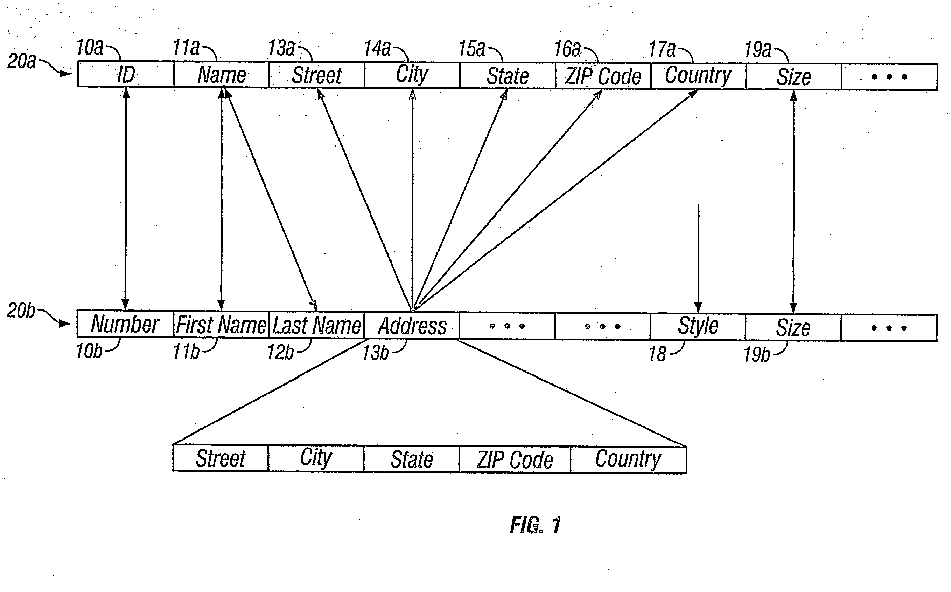

As mentioned above, syntax and data translation difficulties can be present when dealing with translation. An example of potential syntax problems that should be addressed when translating messages is shown in Figure 1. Two different messages 20a and 20b with different syntax formats are shown. In message 20a, the name of a field 10a may be different from the name of the field 10b in message 20b that contains the equivalent data. For example, a field named "ID" in message 20a could be known as "Number" in message 20b.

A single field in message 20a may be presented in the message 20b as multiple fields. For example, a name field 11a in message 20a may be presented as separate fields of first name 11b and last name 12b in message 20b. Another potential problem is that complex data types may be present in a field such as an address field 13b in message 20b. For example, the entire address information could exist within a single field 13b that may have to be separated into fields 13a, 14a, 15a, 16a and 17a when translated into the format of.message 20a.

Yet another potential problem is that a field 18 may be entirely missing in one of the formats. In the example shown, no field for the information regarding style 18 in message 20b exists in message 20a. Another worry is handling different field formats. For instance, information relating to size could be a two-character field 19a in message 20a and be a four-integer field 19b in message 20b. Any solution should be capable of handling each of these potential syntax translation problems.

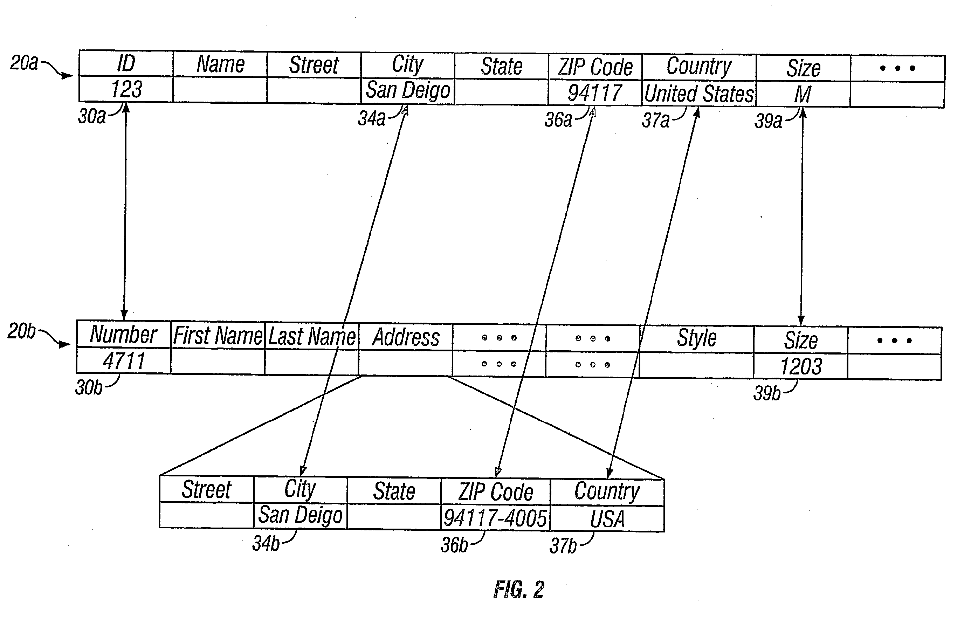

In Figure 2, an example of problems with data translation between two different message formats is shown. Internal ID of "123" 31a may exist in message 20a that equates to the same information in message 20b, but in that format it may be known as "4711" 31b. Misspellings may also exist. For example, in message 20b the city of "San Diego" is in field 34a. Obviously, field 34b in message 20b refers to San Diego as well, but it is misspelled as "San Deigo".

Another potential data' translation problem is with granularity. For example, the information related to ZIP Code may be a traditional five digit ZIP Code 36a in message 20a, while it may be the more detailed nine digit ZIP Code 36b in message 20b. Another potential problem is abbreviations. In message 20a, "United States" 37a is listed as the country. However, in message 20b, that same information is presented as "USA" 37b.

Representation is also a potential problem. For example, in message 20a, size is represented as "M" 39a. However, that same size may be represented as "1203" 39b in message 20b. Each of these potential problems with data translation should be addressed by any message translation solution.

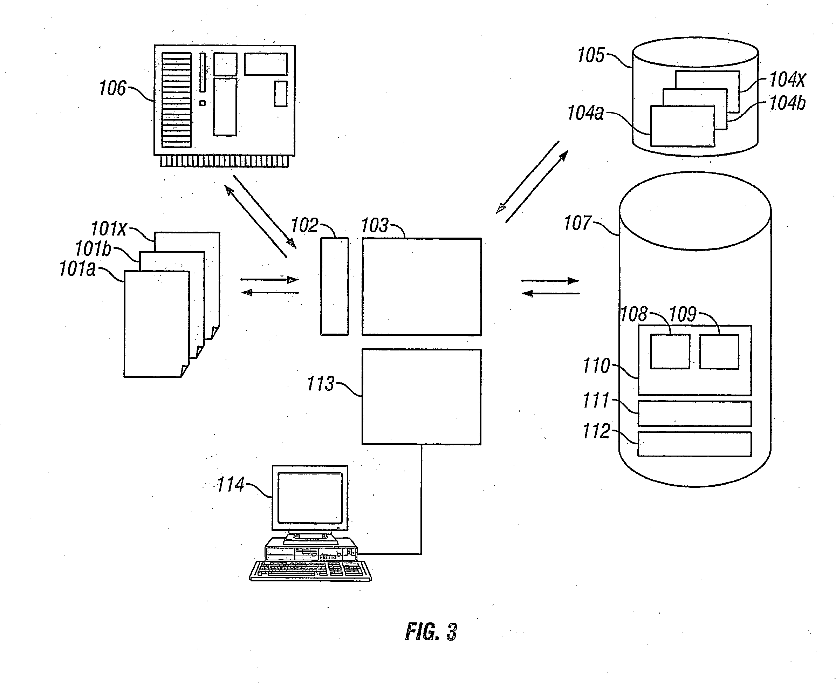

Referring to Figure 3, a system according to an embodiment of the present invention is shown that addresses both the syntax and data translation problems in a relatively inexpensive, flexible and reliable manner. The system includes an interface 102 that accepts incoming documents 101a-x having messages to be translated. Agent 103 is provided for managing the translation. The system includes a database 105 for storing mappings 104a-x. An outside message translation service 106 can be accessed through interface 102 for translating messages. Additional outside message translation services could also be accessed if desired. Moreover, preferred outside services could be specified so that certain more trusted outside services are used over services not as trusted when mappings are available from more than one service.

Mapping knowledge base 107 is provided for mapping translations for messages. Mapping knowledge base 107 contains relationship information 110, which in turn contains information relating to.both fields 108 and data 109. Mapping knowledge base 111 also contains experience information 111 gained through successful mappings and proximities information 112. A user interface 113 is provided to provide a user 114, preferably, with a mapping workbench and work list.

The mapping knowledge base 107 could be partially pre-configured with knowledge typical for mapping business documents or other documents from certain products and their associated versions. Some examples of such preconfigured knowledge based on the cases of syntax translation are: 1) field names (names like product, item and material may be synonymous); 2) complex data types (for example, addresses); 3) missing fields (currency type, for example, can be derived from the country; and 4) field format (checks for non-trivial conversions like between character and numeric). Some examples of pre-configured knowledge based on cases of data translation are: 1) abbreviations (common abbreviations such as ISO codes and country specific standards) and 2) representation (conversion between different units of measure.

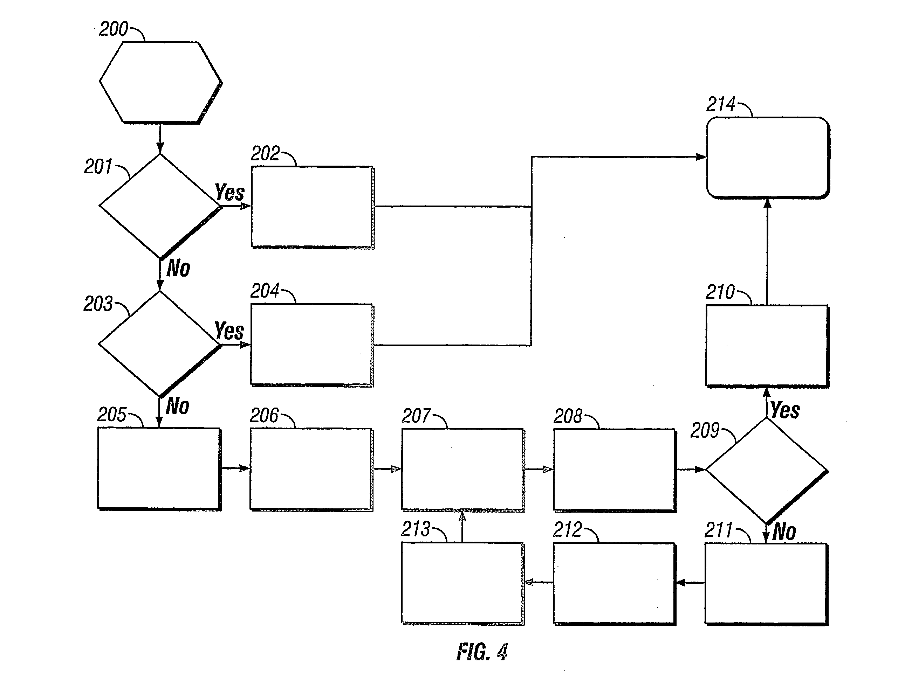

A process according to an embodiment of the present invention is depicted in Figure 4. This process uses the system of Figure 3. In step 200, a message that needs to be translated 101a is sent to agent 103 through interface 102. Information (such as product and its associated release version and document type) relating to the format of the message and the format into which the message needs to be translated is preferably included in the document and sent along with the message. If the format of the message is unknown, a separate agent (not shown) can be used to determine this format.

In step 201, agent 103 checks whether it has access to an existing map 104a in database 105 that can be used to translate message 101a into the appropriate format. If one is available, in step 202 the existing map is used. If one is not available, in step 203 it is determined if an external .mapping service 106 is available that has an appropriate map to be used in the translation or to handle the mapping. If one is available, in step 204, outside mapping service 106 can be used to obtain the map or to generate the mapping. If desired, the resulting map may be stored in database 105. As mentioned above, preferred services can be set up to permit utilization of more trusted services when multiple services can provide the appropriate mapping. If an external service is not available, then agent 103 starts working with knowledge base 107 to generate the mapping.

In step 205, initially, the format of the message is determined and the proximity of the format of the message to the known formats is determined. The access to the knowledge base will be guided by the determined proximity. The syntax mapping is performed first. Based on experience gained in past mappings, the document is decomposed into its basic components. These can be individual fields or groups of fields. For each component, a suitable mapping is located in the knowledge base. The agent calculates confidence levels for each individual mapping as well as for larger parts of the document. Predefined thresholds exist. When the syntax mapping has been completed the data mapping takes place.

In step 206, document building blocks are identified. Once the building blocks are identified, all possible partial mappings are performed in step 207 using information in mapping knowledge base 107. This permits successful partial mappings to be reused between different formats. Next, completeness and confidence levels are checked in step 208. In step 209, it is determined if the mapping is complete and satisfactory. This determination can be the use of predefined confidence threshold. If the confidence level falls below the predefined threshold, it is determined to be unsatisfactory. If the mapping is satisfactory, the mapping knowledge base 107 is updated, if appropriate, and the map is stored in database 105 in step 210. If it is unsatisfactory, then in step 211, the mapping is added to a work list for user 114.

In step 212, user 114 performs work required by the work list. In addition to or in lieu of work done by a user, other agents or algorithms can be employed to handle the work required on the work list. In step 213, mapping knowledge base 107 is updated based upon the results of the work performed as required by the work list. Then the process returns to step 207. Once an adequate mapping is obtained, either from database 105, external mapping service 106 or from mapping knowledge base 107, a document translation is performed in step 214 and the translated message is forwarded back out interface 102 to the appropriate destination.

Although the.preferred embodiments of the present invention have been described and illustrated in detail, it will be evident to those skilled in the art that various modifications and changes may be made thereto without departing from the spirit and scope of the invention as set forth in the appended claims and equivalents thereof.

## Claims

1. A message translation system for handling message translation including syntax and data translation comprising:
an interface (102), said interface (102) accepting a message (20a, 20b) to be translated and communicating with at least one external translation service (106) capable of providing a mapping;
a mapping database (105), said mapping database (105) storing existing mappings (104a-x);
a mapping knowledge base (107), said mapping knowledge base (107) being capable of being used to build mappings, wherein said mapping knowledge base (107) comprises proximities information (112);
a mapping agent (103), said mapping agent (103) communicating with said interface (102), said mapping database (105) and said mapping knowledge base (107) to manage mappings to be used in translation of messages (20a, 20b), wherein the message translation system is enabled to determine the format of the message (20a, 20b) and the proximity of the format of the message to known formats.

2. The message translation system as in claim 1, further comprising a user interface (113), said user interface (113) providing a work list for mappings determined to not be acceptable and a mapping workbench permitting a user (114) to work on mappings.

3. The message translation system as in claim 2, wherein said work list may be completed by said user (114) working on said mapping workbench or through an algorithm functioning without user intervention.

4. The message translation system as in one of the preceding claims, wherein said mapping knowledge base (107) comprises relationship information (110), said relationship information (110) comprising field information (108) and data information (109).

5. The message translation system as in one of the preceding claims, wherein said mapping knowledge base (107) comprises experience information (111).

6. The message translation system as in claim 5, wherein said experience information (111) is updated based upon
- successful mappings; and/or
- work results of work performed in response to said work list.

7. A process for translating messages (20a, 20b) between different formats comprising the steps of:
determining if a stored map (104a-x) can be used to perform said translation;
if said stored map (104a-x) can be used to perform said translation, utilizing said stored map (104a-x) to perform said translation;
if said stored map (104a-x) cannot be used to perform said translation, determining if an external service (106) can be used to obtain an external map to use in said translation;
if said external service (106) can be used to obtain said external map, obtaining said external map and performing said translation utilizing said external map;
if said external service (106) cannot be used to obtain said external map, generating an internal map and utilizing said internal map to perform said translation, wherein said generating said internal map step comprises identifying a format of said message (20a, 20b) and a proximity to similar formats.

8. The process for translating messages (20a, 20b) as in claim 7, wherein said generating said internal map step comprises identifying document building blocks.

9. The process for translating messages (20a, 20b) as in claim 7 or 8, wherein said generating said internal map step comprises performing possible partial mappings and generating an internal mapping.

10. The process for translating messages (20a, 20b) as in claim 9, wherein said generating said internal map step comprises calculating completeness of an internal mapping and a confidence level.

11. The process for translating messages (20a, 20b) as in claim 10, wherein said generating said internal map step further comprises determining if said internal mapping is complete and satisfactory, said satisfaction being determined by comparing said confidence level to a pre-determined threshold.

12. The process for translating messages (20a, 20b) as in claim 10 or 11, wherein said generating said internal map step further comprises preparing a work list if said confidence level falls below said pre-determined threshold.

13. The process for translating messages (20a, 20b) as in claim 12, wherein generating said internal map step comprises updating a mapping knowledge base with information obtained from
- results of work performed as required by said work list; and/or
- successful mappings.

## Patentansprüche

1. Nachrichtenübersetzungssystem zum Handhaben von Nachrichtenübersetzungen einschließlich Syntax- und Datenübersetzung, das umfasst:
eine Schnittstelle (102), wobei die Schnittstelle (102) eine Nachricht (20a, 20b), die übersetzt werden soll, annimmt und mit wenigstens einem externen Übersetzungsdienst (106), der fähig ist, eine Abbildung bereitzustellen, kommuniziert;
eine Abbildungsdatenbank (105), wobei die Abbildungsdatenbank (105) vorhandene Abbildungen (104a-x) speichert;
eine Abbildungswissensbasis (107), wobei die Abbildungswissensbasis (107) fähig ist, für den Aufbau von Abbildungen verwendet zu werden, wobei die Abbildungswissensbasis (107) Näheinformationen (112) umfasst;
einen Abbildungsagenten (103), wobei der Abbildungsagent (103) mit der Schnittstelle (102), der Abbildungsdatenbank (105) und der Abbildungswissensbasis (107) kommuniziert, um bei der Übersetzung von Nachrichten (20a, 20b) verwendet zu werden, wobei das Nachrichtenübersetzungssystem in der Lage ist, das Format der Nachricht (20a, 20b) und die Nähe des Formats der Nachricht zu bekannten Formaten zu bestimmen.

2. Nachrichtenübersetzungssystem nach Anspruch 1, das ferner eine Benutzerschnittstelle (113) umfasst, wobei die Benutzerschnittstelle (113) eine Arbeitsliste für Abbildungen, die als nicht annehmbar bestimmt werden, und eine Abbildungs-Workbench, die es einem Benutzer (114) erlaubt, an den Abbildungen zu arbeiten, bereitstellt.

3. Nachrichtenübersetzungssystem nach Anspruch 2, wobei die Arbeitsliste von dem Benutzer (114), der an der Abbildungs-Workbench arbeitet, oder durch einen Algorithmus, der ohne Benutzereinwirkung funktioniert, abgeschlossen werden kann.

4. Nachrichtenübersetzungssystem nach einem der vorangehenden Ansprüche, wobei die Abbildungswissensbasis (107) Beziehungsinformationen (110) umfasst, wobei die Beziehungsinformationen (110) Feldinformationen (108) und Dateninformationen (109) umfassen.

5. Nachrichtenübersetzungssystem nach einem der vorangehenden Ansprüche, wobei die Abbildungswissensbasis (107) Erfahrungsinformationen (111) umfasst.

6. Nachrichtenübersetzungssystem nach Anspruch 5, wobei die Erfahrungsinformationen (111) basierend auf folgendem aktualisiert werden:
- erfolgreichen Abbildungen und/oder
- Arbeitsergebnissen, die ansprechend auf die Arbeitsliste durchgeführt werden.

7. Verfahren zum Übersetzen von Nachrichten (20a, 20b) zwischen verschiedenen Formaten, das die folgenden Schritte umfasst:
Bestimmen, ob ein gespeicherter Abbildungsplan (104a-x) verwendet werden kann, um die Übersetzung durchzuführen;
wenn der gespeicherte Abbildungsplan (104a-x) verwendet werden kann, um die Abbildung durchzuführen, Verwenden des gespeicherten Abbildungsplans (104a-x), um die Übersetzung durchzuführen;
wenn der gespeicherte Abbildungsplan (104a-x) nicht verwendet werden kann, um die Übersetzung durchzuführen, Bestimmen, ob ein externer Dienst (106) verwendet werden kann, um einen externen Abbildungsplan für die Verwendung in der Übersetzung zu gewinnen;
wenn der externe Dienst (106) verwendet werden kann, um den externen Abbildungsplan zu gewinnen, Gewinnen des externen Abbildungsplans und Durchführen der Übersetzung unter Verwendung des externen Abbildungsplans;
wenn der externe Dienst (106) nicht verwendet werden kann, um den externen Abbildungsplan zu gewinnen, Erzeugen eines internen Abbildungsplans und Verwenden des internen Abbildungsplans, um die Übersetzung durchzuführen, wobei der Schritt des Erzeugens des internen Abbildungsplans das Identifizieren eines Formats der Nachricht (20a, 20b) und einer Nähe zu ähnlichen Formaten umfasst.

8. Verfahren zum Übersetzen von Nachrichten (20a, 20b) nach Anspruch 7, wobei das Erzeugen des internen Abbildungsplans das Identifizieren von Dokumentaufbaublöcken umfasst.

9. Verfahren zum Übersetzen von Nachrichten (20a, 20b) nach Anspruch 7 oder 8, wobei der Schritt des Erzeugens des internen Abbildungsplans das Durchführen möglicher Teilabbildungen und das Erzeugen einer internen Abbildung umfasst.

10. Verfahren zum Übersetzen von Nachrichten (20a, 20b) nach Anspruch 9, wobei der Schritt des Erzeugens des internen Abbildungsplans das Berechnen der Vollständigkeit einer internen Abbildung und eines Vertrauensniveaus umfasst.

11. Verfahren zum Übersetzen von Nachrichten (20a, 20b) nach Anspruch 10, wobei das Erzeugen des internen Abbildungsplans ferner das Bestimmen umfasst, ob die interne Abbildung vollständig und zufriedenstellend ist, wobei die Zufriedenheit bestimmt wird, indem das Vertrauensniveau mit einem vorgegebenen Schwellwert verglichen wird.

12. Verfahren zum Übersetzen von Nachrichten (20a, 20b) nach Anspruch 10 oder 11, wobei der Schritt des Erzeugens des internen Abbildungsplans ferner das Erzeugen einer Arbeitsliste umfasst, wenn das Vertrauensniveau unter den vorbestimmten Schwellwert fällt.

13. Verfahren zum Übersetzten von Nachrichten (20a, 20b) nach Anspruch 12, wobei der Schritt des Erzeugens des internen Abbildungsplans das Aktualisieren einer Abbildungswissensbasis mit Informationen umfasst, die gewonnen werden aus:
- Ergebnissen von Arbeit, die nach Bedarf durch die Arbeitsliste durchgeführt wird; und/oder
- erfolgreiche Abbildungen.

## Revendications

1. Système de traduction de messages pour gérer la traduction de messages incluant la traduction de syntaxe et de données, comprenant :
une interface (102), ladite interface (102) acceptant un message (20a, 20b) devant être traduit et communiquant avec au moins un service de traduction externe (106) capable de fournir un mappage ;
une base de données de mappage (105), ladite base de données de mappage (105) stockant des mappages existants (104a-x) ;
une base de connaissances de mappage (107), ladite base de connaissances de mappage (107) étant capable d'être utilisée pour construire des mappages, dans lequel ladite base de connaissances de mappage (107) comprend des informations de proximités (112) ;
un agent de mappage (103), ledit agent de mappage (103) communiquant avec ladite interface (102), ladite base de données de mappage (105) et ladite base de connaissances de mappage (107) pour gérer des mappages devant être utilisés dans la traduction de messages (20a, 20b), dans lequel le système de traduction de messages est activé pour déterminer le format du message (20a, 20b) et la proximité du format du message à des formats connus.

2. Système de traduction de messages selon la revendication 1, comprenant en outre une interface utilisateur (113), ladite interface utilisateur (113) fournissant une liste de travail pour des mappages déterminés comme n'étant pas acceptables et un atelier de mappage permettant à un utilisateur (114) de travailler sur des mappages.

3. Système de traduction de messages selon la revendication 2, dans lequel ladite liste de travail peut être remplie par ledit utilisateur (114) travaillant sur ledit atelier de mappage ou par un algorithme fonctionnant sans intervention d'utilisateur.

4. Système de traduction de messages selon une des revendications précédentes, dans lequel ladite base de connaissances de mappage (107) comprend des informations relationnelles (110), lesdites informations relationnelles (110) comprenant des informations de champ (108) et des informations de données (109).

5. Système de traduction de messages selon une des revendications précédentes, dans lequel ladite base de connaissances de mappage (107) comprend des informations d'expérience (111).

6. Système de traduction de messages selon la revendication 5, dans lequel lesdites informations d'expérience (111) sont mises à jour en fonction de
- mappages réussis ; et/ou
- résultats de travail réalisé en réponse à ladite liste de travail.

7. Procédé de traduction de messages (20a, 20b) entre différents formats comprenant les étapes consistant à :
déterminer si une mappe stockée (104a-x) peut être utilisée pour réaliser ladite traduction ;
si ladite mappe stockée (104a-x) peut être utilisée pour réaliser ladite traduction, utiliser ladite mappe stockée (104a-x) pour réaliser ladite traduction ;
si ladite mappe stockée (104a-x) ne peut pas être utilisée pour réaliser ladite traduction, déterminer si un service externe (106) peut être utilisé pour obtenir une mappe externe à utiliser dans ladite traduction ;
si ledit service externe (106) peut être utilisé pour obtenir ladite mappe externe, obtenir ladite mappe externe et réaliser ladite traduction en utilisant ladite mappe externe ;
si ledit service externe (106) ne peut pas être utilisé pour obtenir ladite mappe externe, générer une mappe interne et utiliser ladite mappe interne pour réaliser ladite traduction, dans lequel ladite étape de génération de ladite mappe interne comprend identifier un format dudit message (20a, 20b) et une proximité à des formats similaires.

8. Procédé de traduction de messages (20a, 20b) selon la revendication 7, dans lequel ladite étape de génération de ladite mappe interne comprend identifier des blocs de construction de document.

9. Procédé de traduction de messages (20a, 20b) selon la revendication 7 ou 8, dans lequel ladite étape de génération de ladite mappe interne comprend réaliser des mappages partiels possibles et générer un mappage interne.

10. Procédé de traduction de messages (20a, 20b) selon la revendication 9, dans lequel ladite étape de génération de ladite mappe interne comprend calculer l'exhaustivité d'un mappage interne et un niveau de confiance.

11. Procédé de traduction de messages (20a, 20b) selon la revendication 10, dans lequel ladite étape de génération de ladite mappe interne comprend en outre déterminer si ledit mappage interne est complet et satisfaisant, ladite satisfaction étant déterminée en comparant ledit niveau de confiance à un seuil prédéterminé.

12. Procédé de traduction de messages (20a, 20b) selon la revendication 10 ou 11, dans lequel ladite étape de génération de ladite mappe interne comprend en outre préparer une liste de travail si ledit niveau de confiance tombe en dessous dudit seuil prédéterminé.

13. Procédé de traduction de messages (20a, 20b) selon la revendication 12, dans lequel l'étape de génération de ladite mappe interne comprend mettre à jour une base de connaissances de mappage avec des informations obtenues à partir de
- résultats de travail réalisé comme requis par ladite liste de travail ; et/ou
- mappages réussis.
